# EUROPEAN PATENT SPECIFICATION

(11) **EP 1 857 946 B1**
(45) Date of publication and mention of the grant of the patent: **04.04.2018**
(21) Application number: 07108295.2
(22) Date of filing: 15.05.2007
(51) Int. Cl.: G06F 17/30

(54) **Systems and methods for migrating data**
Systeme und Verfahren zur Migration von Daten
Systèmes et procédé de migration de données

(30) Priority: 16.05.2006 US 800427 P
(43) Date of publication of application: 21.11.2007
(73) Proprietor: SAP SE, 69190 Walldorf (DE)
(72) Inventor: Daschakowsky, Klaus, Bad Schönborn 76669 (DE)
(74) Representative: Richardt Patentanwälte PartG mbB

(56) References cited:
- WO-A-99/52047
- WO-A-2004/077215
- US-A1- 2004 083 194
- US-A1- 2004 236 796

## Description

### BACKGROUND OF THE INVENTION

The present invention relates to systems and methods for migrating data from a data source to a data destination. More particularly, the present invention relates to systems and methods for migrating data from at least one data source to at least one data destination according to one ore more migration rules, where the migration rules indicate how the data migration has to be done.

Data migration may generally refer to the process of transferring data from one format and/or computer system to another format and/or computer system. Herein, the term "format" may concern the representation of the data and/or the data model. Data migration may be applied when organizations decide to use new computing systems or database management systems that are incompatible with the current systems. Further, data migration may be necessary when organizations change their computer systems by upgrading existing computer systems to new computer systems.

Typically, custom conversion software is created or programmed to move and convert data from a first (source) computer system to a second (destination) computer system.

Available conversion software uses import interfaces of the destination (or target) system. These import interfaces do not cover the full scope of the business objects of the destination system. Further post processing steps are necessary in order to convert moved data.

WO 99/52047 A relates to a method and system for migrating data according to the preambles of the independent claims. WO 2004/077215 relates to the field of data migration and conversion from any source of data. For the purpose of sharing data, analyzing and deriving, the features of relational database technologies are enabled to be used on non-relational database generated data without programming effort.

Existing migration tools usually move data from operational databases to data warehouses and usually do not provide flexibility and customization desired.

### SUMMARY OF THE INVENTION

The object of the present invention is to provide a migration system and method which allow more flexibility in migrating data from any source system to any target system. This is achieved by the system and the method with the features of the independent claims.

Systems and methods may provide a neutral interface which comprises a mapping of external data to business objects located on the target or destination system. All the business objects of the target system may be accessible directly by the neutral interface. Therefore, the exemplary embodiments of the invention may have an advantage, that not only the released interfaces of the target systems are accessible and that the migration of business objects can be performed completely and correctly according to the business requirements.

In exemplary embodiments, a further advantage may be the receiver driven approach of building and customizing a migration and/or migration objects. During the creation of the migration rules, the source data fields may be analyzed for creating a target data field. The receiver driven approach may provide an advantage that migration projects based on complex data models can be realized easier.

Further, in exemplary embodiments of the invention, a delete function may provide an advantage, that a migration project, or several steps of the migration project, can be carried out several times, e.g. for testing reasons, without the need of deleting the whole data basis of the target system. For example, only the just migrated data may be deleted to perform a further migration based on the original target data.

Other objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF DRAWINGS

The accompanying drawings, which constitute a part of this disclosure, illustrate various embodiments and aspects of the present invention and, together with the description, explain the principles of the invention.

In the drawings:
- Fig. 1: illustrates an exemplary embodiment of a migration system consistent with the invention;
- Fig. 2: illustrates an exemplary migration process consistent with the present invention;
- Fig. 3: illustrates an exemplary flow diagram of an embodiment consistent with the present invention;
- Fig. 4: illustrates an exemplary sequence diagram of a data migration process consistent with the present invention; and
- Fig. 5: illustrates an exemplary data migration of a data record consistent with the present invention.

### DETAILED DESCRIPTION OF EXEMPLARY EMBODIMENTS

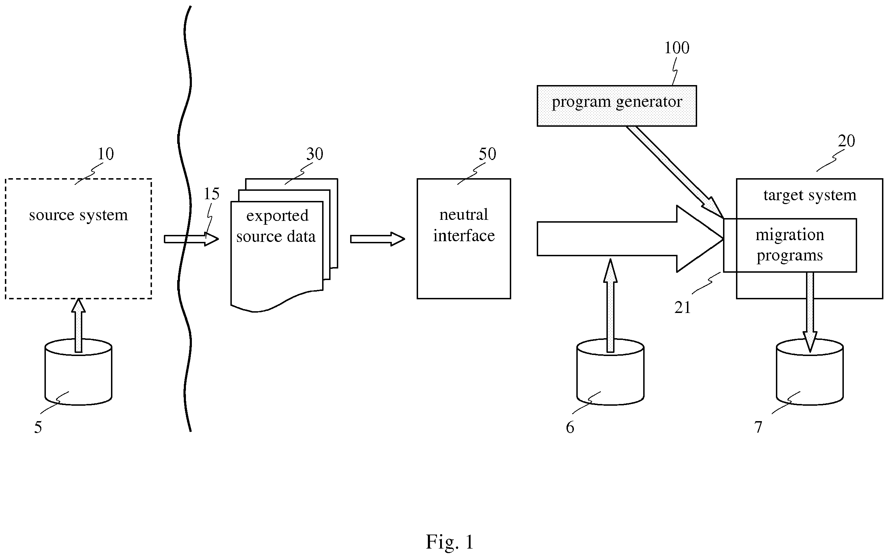

Fig. 1 shows an exemplary embodiment of an migration system consistent with the present invention. One task during a migration process may be the transfer of data (e.g. business data such as purchase orders or customer master data), from an existing computer system (source system 10) to a new computer system (destination (or target) system 20). Since in most cases the data structures of the source system 10 may be different from the data structures of the destination system 20, a data transfer may also include conversion of the data from the source data format into the destination data format. As used herein, this conversion may be referred to as a mapping or transformation.

To support a migration process that is independent of the source system 10, the inventive migration system may include a neutral interface 50. The neutral interface 50 may comprise a number of well defined data structures, denoted as source data definitions. For example, the neutral interface 50 may provide a source data definition for the customer master data, comprising a unique identifier, such as the name and address of a customer. In one exemplary embodiment, source data definitions are stored as flat files, structured files, XML data files, an XML scheme, or as a data repository.

The source data stored in a database 5 may be transferred from the source system 10 to the destination system 20 by using the well defined data structures provided by the neutral interface 50. Transferred data is then stored in a database 7 located with the destination system 20. Thus, a data migration is possible even though the source system 10 and the destination system 20 are part of different enterprises.

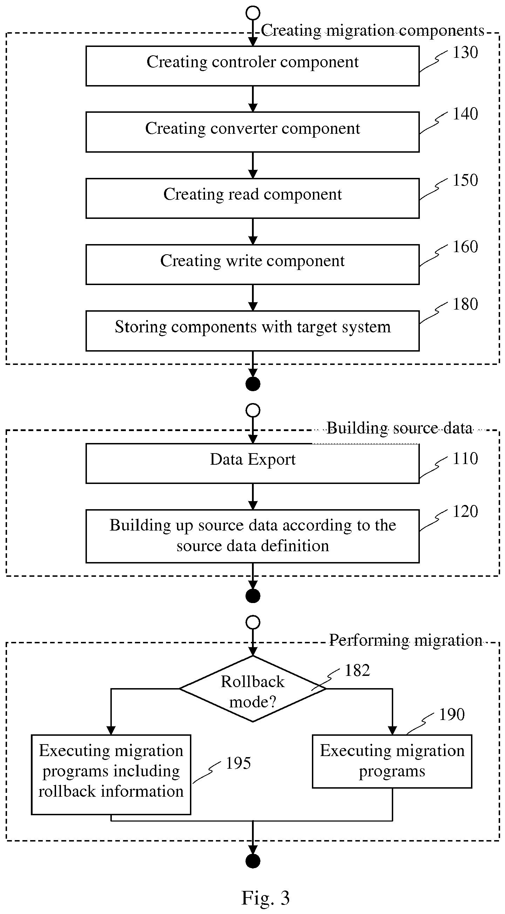

The source data is exported 15 from the source system 10 into one or more data files 30. The structures of the data files 30 may correspond to one of the well defined data structures provided by the neutral interface 50. The data files 30 may be stored as flat files, structured files, XML data files, or within a database. A program generator 100 creates a number of migration programs 21 within the destination system 20 and starts the migration programs immediately or after a delay. As used herein, the migration programs 21 may also be denoted as migration components. The migration programs 21 transfer the exported source data 30 to the destination system 20. During transfer, the migration programs 21 may modify the exported data 30 according to a number of migration rules, which are stored, for example, in a database 6. Exemplary migration components 21 are described in more detail below in connection with Fig. 3.

Data source, source data definitions, migration rules, program generator and data destination may be located physically with different computer systems. For example, data sources may be located with a first sub system, while source data definitions, migration rules and program generator may be located with a second sub system, and, further, destination data may be located with a third sub system. In one embodiment, the sub systems are connected by a communication network. In a further embodiment, data source, source data definitions, migration rules, program generator and data destination are located with the same computer system.

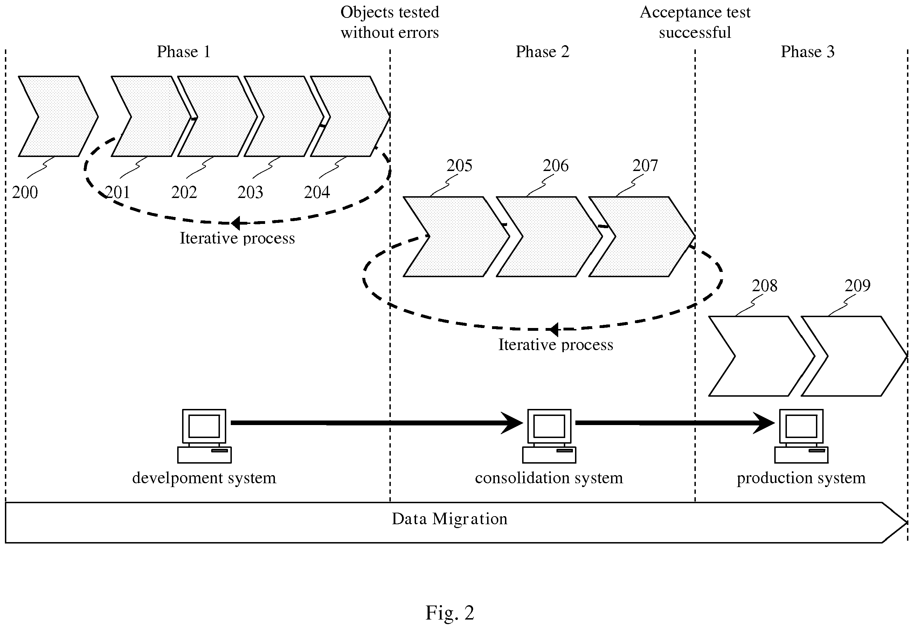

Fig. 2 shows an exemplary timeline of a migration process according to an embodiment consistent with the invention. The data migration timeline may be subdivided into three migration phases, starting with migration phase 1.

During the first migration phase 1, which may be carried out by a development system, the migration steps 200 to 204 may be executed.

First step 200 comprises selecting the migration objects based on the business objects to be migrated. Each migration object may comprise the respective source data definition, a number of predefined migration rules, and the destination data definitions. For example, a customer can select the migration object "MATERIAL DATA". The migration object MATERIAL DATA represents the business object MATERIAL DATA and a set of predefined migration rules according to the business object.

If one or more migration objects do not fit the customer requirements, e.g. if the standard migration variant of a migration rule does not match the customer requirements, within the next step 201 the migration rule variants of the respective migration rules may be selected according to the customer requirements. The inventive migration system may provide a number of predefined migration rules. A migration rule provides at least one migration variant. A migration variant may comprise predefined program code adapted to modify source values according to the requirements of the destination data fields of the destination system. The predefined program code may be ready to use and a customizing of the program code is not necessary.

The third step 202 may comprise adaptation of rule adaptation. Rule adaptation of the migration objects may be executed by mapping source data fields to destination data fields. Mapping may also include assigning a migration rule per destination data field. Further, if no migration rule is assigned to a destination data field, a new migration rule may be created or an existing migration rule can be used and assigned to the destination data field. It is self evident, that the existing migration rule can be adapted according to the customer requirements. During execution of the data migration, the values of the source data fields may be converted according to the assigned migration rules and stored as migrated values into the destination data fields.

Some of the migration variants which may be provided by the migration systems are:
- MOVE (1 to 1 data transfer) - the source value will be transferred from the source field to the destination field without any modification;
- VALUE MAPPING - the source value will be transferred from the source field to the destination field by replacing the source value with a predefined destination value;
- INIT - initializing the destination field with a predefined value if the source field is empty or the source field does not exists. For example, if destination data requires the country code of a customer but the source data of the customer does not provide the country, then the INIT variant assigns a predefined country code to the destination field;
- DOMAIN RULE - data fields of similar type are migrated uniformly and consistently according to a centrally stored migration rule.

During rule adaptation or rule customizing, further custom migration variants may be added to the migration rule. One example of such a migration variant is concatenating the source value with a predefined suffix or prefix or a custom program/program code for more complex operations. In one embodiment, customizing of predefined rules or specifying of new rules and/or migration variants is supported by a migration development system. The migration development system provides functionality such as storing and restoring customized migration rules or migration variants.

If a migration rule provides more than one migration variant, the respective migration variant can be selected during the step 202. In one embodiment of the invention, the variant MOVE may be the standard migration variant.

The following step 203 may perform a data import of data which is to be transferred from the source system to the destination system. During the import, the exported source data may be converted into an internal data representation. The conversion into an internal data representation may show an advantage that processing of the data can be performed efficiently. In exemplary embodiments, due to the internal data representation, the data processing can be performed independently of the source system and the destination system.

Within step 204 a formal test of the migration project may be carried out by testing all conversion objects using a small amount of data. Such conversion objects may be typical business objects such as customer master data, sales orders, or material master data.

The steps 201 to 204 may be repeated iteratively until no more errors occur during the formal test.

After step 204, the first migration phase 1 may finish and the migration process can be continued with the second migration phase 2.

Migration phase 2 may start with step 205 by performing a full volume data migration within the consolidation system. All data which is to be transferred from the source system to the destination system may be migrated object-wise according to the migration customizing defined in migration phase 1. The migration within step 205 may be done by using the data in the internal data representation.

Within the next process steps 206 and 207, the migrated data may be validated object-wise, and an acceptance test is performed. Migration phase 2 may be repeated iteratively until no more errors occur. During migration phase 2 it is still possible to modify the migration customizing. If object-wise validation and acceptance test are successful, the migration is ready to be performed with the production system in migration phase 3.

In migration phase 3, the productive data migration 208 may be performed and a final validation 209 carried out. Typically, steps 208 and 209 are performed with the production system which is the destination system. After the successful validation 209, the whole source data are available with the destination system.

In a further embodiment the steps 200 to 204 of phase 1 and the steps 205 to 207 of phase 2 may be carried out on a single system, which is a test system. Thereby, a full copy of the production system may be made on which the steps 200 to 207 as described above are carried out. After the successful acceptance test, the migration may be transported into the production system where the steps 208 and 209 may be executed as described above based on the transported migration.

Fig. 3 shows an exemplary block diagram of an embodiment of the inventive process. Building source data (step 110, 120), creating migration components (steps 130 to 180) and performing migration (steps 182 to 195) are carried out separately. Further, building source data, creating migration components and performing migration may be performed on different computer systems.

First, a data export 110 may be done. The data which is to be migrated, is exported from the source system 10 into a number of export files 30, where the structure of the export files corresponds to the source data definitions provided by the migration system, i.e. the neutral interface 50. Export can be performed by using third party export tools or custom export programs. Of course, export mechanisms provided by the source system can be used. In one embodiment, the export files are XML data files.

In a further embodiment, data is exported into export files, where the structure of the export files is different from the source data definitions. In this case, the export files are converted, step 120, into the corresponding structure. The result of step 110, and optionally of step 120, is a number of export files comprising data according to the source data structure provided by the neutral interface. Data export may be performed on the computer system where the source data or the source system is located. It is also possible that the export tools are running on a different computer system provided that the export tools have access to the source system in order to read and export the source data.

The next process comprises generation of the migration programs (or migration components) by a program generator. Using the information about the customizing of the migration project as described above, the program generator is able to create several programs or components adapted for performing the data transfer and data conversion.

In an exemplary embodiment of the invention, the migration components may comprise at least a controller component, a read component, a write component and a converter component.

Step 130 may generate a controller component. The controller component controls the data migration and monitors the processing. Parallel processing of data, which is also possible according to the inventive method and system, is also controlled by the controller component. Further, the controller component is responsible for triggering a restart of data migration. Restart of data migration is necessary if during the migration an error occurs. Such an error may be for example interruption of the communication link between the system where the migration programs are running and the computer system where the source data is located. It is also possible to restart a data migration at the last valid position. Thus, migration of already successfully migrated data can be avoided.

The next step 140 may generate the converter component which performs the conversion of the data to be migrated according to the migration rules as described in detail above.

Step 150 may create a read component which reads the exported data according to the source data definition and converts those into the internal data representation. This conversion is denoted herein as technical conversion.

Next, step 160 may generate a write component. The write component transfers the data from the internal representation to the destination representation and triggers the import of the data into the destination system.

It is to be noted that the time sequence in which the components are generated is not relevant for the inventive system.

In the following step 180, the created migration components are stored within the destination system where the migration is executed.

The next process performs the data migration. The inventive system and method provides the possibility of performing data migrations in a rollback mode. If the system is running in the rollback mode, the migrated data is marked as deletable. In this way, a migration can be performed, and afterwards the migrated data can be removed without impacting the destination system. For each inserted data record, a respective delete-record is stored within the destination system. If an error occurs during the migration, or the migration customizing does not correspond to the customer requirements, the whole data migration can be revoked by removing the inserted data records according to the stored delete-records. Therefore, the iterative process of migration phase 2, as shown on Fig. 2, can be performed multiple times without the need of re-setting up the basic system, i.e. the consolidation system. After removing the migrated data, the delete-records are also removed from the system.

A delete-record may comprise at least a unique identifier, a Run ID, an identifier which identifies the conversion object, and a delete function adapted for removing the respective data record from the destination system. In this way, single data records can be deleted.

Step 182 may determine whether or not the rollback mode is set for the current data migration. If so, the process continues with step 195 by performing the data migration in the rollback mode. In addition to the data records rollback information, e.g. delete-records as described above, are stored with the destination system.

If the rollback mode is not set, step 190 may be performed by executing the migration programs without storing rollback information.

Further, the inventive system and method may provide a test mode (not shown in Fig. 3). If the data migration is running in the test mode, the write operations on the storage device may not be performed. This may be useful during the migration customizing in phase 1.

According to the inventive system, for each conversion object a set of specialized components (controller, read, write and converter) may be generated. In exemplary embodiments, the concept of generating specialized components for each conversion object leads to a far better migration performance compared to a generic program as used in known migration tools.

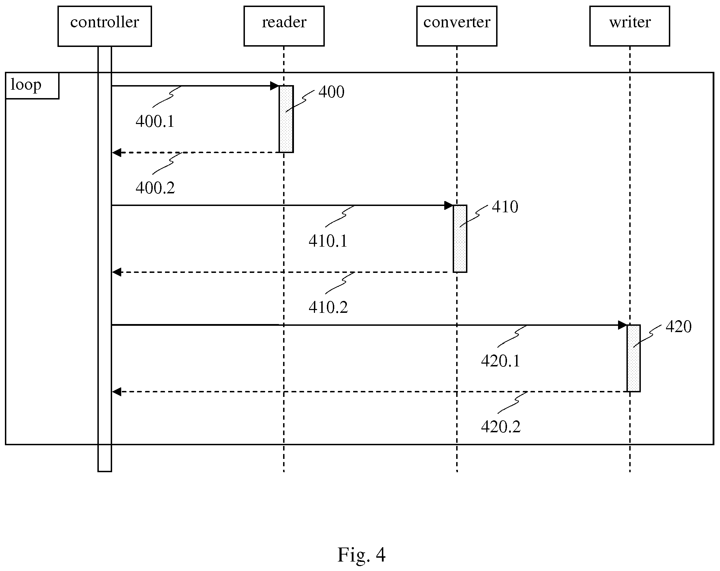

Fig. 4 shows an exemplary sequence diagram of the migration components according to the migration process. First, the controller may determine a portion of the exported data which is to be migrated. The controller triggers 400.1 the read component and passes the information about the data portion to the read component. The read component reads 400 the respective portion of the exported data according to the source data definition and converts 400 the data into an internal representation. The read component passes 400.2 the control back to the controller.

Next, the controller may trigger 410.1 the converter component, which may perform the data conversion according to the migration rules. If the conversion is finished, the converter component passes 410.2 the control back to the controller.

Next, the controller may trigger 420.1 the write component, which may perform the import of the converted data portion and pass 420.2 the control back to the controller. If there is further exported data which is to be migrated, the controller may determine the next data portion and retrigger the read component.

The sequence of reading - converting - writing may be repeated until no more exported data exists to be migrated.

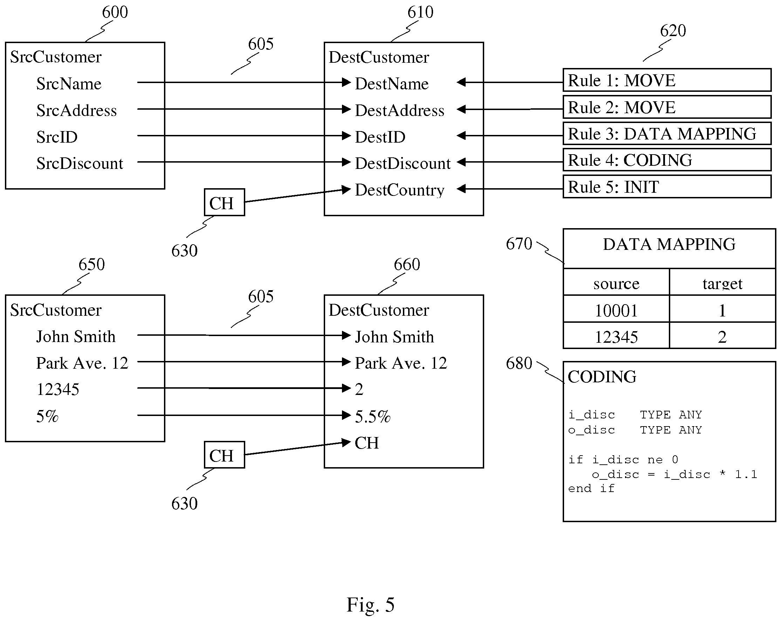

Fig. 5 illustrates an exemplary data migration of a customer data record. Item 600 shows the data structure of migration object CUSTOMER according to the source data definition provided by the neutral interface. The data structure 600 comprises the data fields SrcName, SrcAddress, SrcID, and SrcDiscount.

In a further embodiment data structure 600 may comprises a plurality of different data structures. For example, the data fields SrcName and SrcAddress may be part of a first data structure and the data fields SrcID and SrcDiscount may be part of a second data structure. The inventive system may provide a receiver driven approach for defining mappings of source data fields to destination data fields. With the receiver driven approach, the source data fields have to be determined which are necessary for building a receiver data field, i.e. the destination data field.

Item 610 shows the destination data structure of the migration object CUSTOMER comprising the data fields DestName, DestAddress, DestID, DestDiscount and the additional field DestCountry.

The mappings of the source data fields to the destination date fields are depicted as arrows 605. As shown, all source data fields are mapped to the respective destination data fields. As for the destination data field DestCountry does not exist any source data field and all the customers are located in Switzerland, the destination data field DestCountry is filled by the initialization value CH 630 according to the Rule 5 (INIT).

The items 620 show the migration rules assigned to the respective destination data fields. Rule 1 and Rule 2 (MOVE) indicate that a simple 1 to 1 data transfer should be performed. Rule 3 (DATA MAPPING) indicates that the source values have to be mapped, i.e. converted to destination values according to the mapping table 670. According to the mapping table 670, the source value 12345 has to be converted to the destination value 2.

Rule 4 (CODING) indicates that data transfer from the source field SrcDiscount to destination field DestDiscount is carried out by using a custom program code. The custom program code of this migration rule is shown as item 680. The destination field DestDiscount is filled with the source field by multiplying SrcDiscount by 1.1 and only if DestDiscount is not equal to 0.

Items 650 and 660 show a source data record and the respective destination data record after the migration has been performed. As can be seen, the source values are transferred and converted from the source fields to the destination fields according to the migration rules 620.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

In the foregoing specification, the invention has been described with reference to specific embodiments thereof. The specification and drawings are to be regarded in an illustrative rather than a restrictive sense.

## Claims

1. A system (50) for migrating business objects from a source system (10) to a target system (20), a business object being a collection of business data, the system comprising:
a set of migration objects for use with the migration system, and
a set of migration programs (21) adapted for performing the migration according to the set of migration objects, the migration programs comprising a controller component for determining a portion of the data which is to be migrated,
wherein a migration object comprises:
a definition of the data structures of the source data which describes the business object, and a definition of the data structures of the target data which describes the business object; and
at least one migration rule (620) which specifies migration of the source data describing the business object into the target data describing the business object, wherein a migration rule provides at least one migration variant, a migration variant comprising predefined code adapted to modify source values according to the requirements of the destination data fields of the destination system;
wherein the migration system (50) is adapted for exporting source data from the source system (10) into at least one data file (30), the structure of which corresponding to the source data structures provided by the migration system (50), and then for transferring the at least one exported data file (30) to the target system (20) by the set of migration programs (21) according to the at least one migration rule (620);
the set of migration programs (21) further comprising a converter component, a read component and a write component, the read component being adapted for converting the exported source data into an internal data representation, the write component being adapted for transferring the data from the internal data representation to a target representation, wherein the migration being performed by using the data in the internal data representation, wherein the controller component is adapted
for triggering the read component and for passing the information about the determined portion of the data to the read component, wherein the read component passes the control back to the controller component,
for triggering the converter component for performing the data conversion according to the migration rules, wherein the converter component passes the control back to the controller component, and
for triggering the write component for performing the import of the converted data portion, wherein the write component passes the control back to the controller component.

2. The system according to claim 1, wherein the controller program controls the migration programs (21).

3. The system according to one of the preceding claims, further comprising a program generator (100) adapted for generating the migration programs (21) within the target system (20) and for starting the migration programs immediately or after a delay.

4. The system according to claim 3, further comprising:
a first sub system in which the business objects are located,
a second sub system in which the definitions of the data structures of source data, the definitions of the data structures of target data, the migration rules (620) and the program generator (100) are located, and
a third sub system in which the target data is located.

5. The system according to claim 4, wherein the programs are generated into a software application which is located with the third sub system,

6. The system according to claim 1, wherein migrating the source data includes applying the migration rules (620) to the source data.

7. The system according to one of the preceding claims, wherein the set of migration programs (21) comprise executable binary programs and interpretable program code.

8. The system according to one of the preceding claims, wherein the target is one of a database, a flat file, a structured file, an XML data file, a data container, a message, a service and a software application.

9. The system according to claim 1 or 6, wherein the definition of the data structures of the source data is stored in one of a flat file, a structured file, an XML scheme, a data repository and an XML data file.

10. The system according to claim 1, 6 or 9, wherein the definition of the data structures of the source data is customizable or extensible by hiding or showing source data fields.

11. The system according to claim 9, wherein the data source is one of a database, a flat file, a structured file, an XML data file, and a software application according to the source data definition.

12. The system according to claim 10, wherein the data source is one of a database, a flat file, a structured file, an XML data file, and a software application according to the source data definition.

13. The system according to one of the preceding claims, further comprising a storage device which stores predefined migration values.

14. The system according to claim 1, wherein a migration rule includes at least on of:
a mapping of source data fields to target data fields,
a conversion of source data values of the data to be migrated, whereby conversion includes at least computation, translating source data values of the data to be migrated based on value translation tables, assignments of fixed values to target data fields,
a combination of conversions, and
a mapping of predefined migration data to target data fields and concatenating predefined migration data with source data values.

15. The system according to claim 1, further comprising means for flagging inserted and stored data and means for removing the flagged data from the data destinations.

16. A method for migrating business objects from a source system (10) into a target system (20), a business object being a collection of business data, the method comprising:
selecting, based on the business objects to be migrated, at least one migration object; and
generating, based on the selected at least one migration object, a set of migration programs (21) comprising a controller component for determining a portion of the data which is to be migrated, a converter component, a read component and a write component, the set of migration programs performing the migration of source data describing the business object into target data describing the business object;
**characterized in that** each migration object comprises:
a definition of the data structures of the source data which describes the business object, and a definition of the data structures of the target data which describes the business object; and
at least one migration rule (620) which specifies migration of the source data describing the business object into the target data describing the business object, wherein a migration rule provides at least one migration variant, a migration variant comprising predefined code adapted to modify source values according to the requirements of the destination data fields of the destination system;
the method comprising the steps of
exporting source data from the source system (10) into at least one data file (30), the structure of which corresponding to the source data structures provided by the migration system (50), and then transferring the at least one exported data file (30) to the target system (20) by the set of migration programs (21) according to the at least one migration rule (620),
wherein the exported source data is converted into an internal data representation, the migration is performed by using the data in the internal data representation, and the migrated data is transferred from the internal data representation to a target representation, wherein the controller component
triggers the read component and passes the information about the determined portion of the data to the read component, wherein the read component passes the control back to the controller component,
triggers the converter component for performing the data conversion according to the migration rules, wherein the converter component passes the control back to the controller component, and
triggers the write component for performing the import of the converted data portion, wherein the write component passes the control back to the controller component.

17. The method according to claim 16, wherein the set of migration programs comprises:
a first program which selects data from a plurality of data sources;
a second program which modifies selected data by applying at least one migration rule onto the selected data; and
a third program which inserts the modified data into the data destinations.

18. The method according to claim 17, wherein the controller component further triggers the second program and controls the first, second and third program.

19. The method according to claim 17 or 18, wherein the first program provides a number of interfaces for accessing data sources of different formats on different locations.

20. The method according to claim 17, 18 or 19, wherein the third program provides a number of interfaces for accessing data destinations of different formats.

21. The method according to one of claims 16 to 20, wherein the migration programs comprise executable binary programs and interpretable program codes.

22. The method according to one of claims 16 to 21, wherein a migration rule includes at least one of:
a mapping of source data fields to target data fields,
a conversion of source data values, whereby conversion includes at least computation, translating source data values based on value translation tables, assignments of fixed values to target data fields,
a combination of conversions, and
a mapping of predefined migration data to target data fields and concatenating predefined migration data with source data values.

23. The method according to one of claims 17 to 21, wherein inserting comprises a step of flagging inserted data.

24. The method according to claim 23, wherein flagging comprises inserting of removing statements adapted for removing inserted data.

25. The method according to claim 23, further comprising removing inserted and flagged data from the data destination.

26. The method according to one of claims 17 to 21, further comprising storing and loading data migration definitions.

27. Computer program product comprising instructions for executing the method steps of claims 16-26 when loaded on a computer.

## Patentansprüche

1. System (59) zur Migration von Geschäftsobjekten von einem Quellsystem (10) zu einem Zielsystem (20), wobei ein Geschäftsobjekt eine Sammlung von Geschäftsdaten ist, wobei das System Folgendes aufweist:
einen Satz Migrationsobjekte zur Verwendung mit dem Migrationssystem und
einen Satz Migrationsprogramme (21), die zum Durchführen der Migration gemäß dem Satz Migrationsobjekte geeignet ist, wobei die Migrationsprogramme eine Controllerkomponente zum Bestimmen eines zu migrierenden Teils der Daten aufweisen,
wobei ein Migrationsobjekt Folgendes aufweist:
eine Definition der Datenstrukturen der Quelldaten, die das Geschäftsobjekt beschreiben, und eine Definition der Datenstrukturen der Zieldaten, die das Geschäftsobjekt beschreiben; und
wenigstens eine Migrationsregel (620), die die Migration der Quelldaten, die das Geschäftsobjekt beschreiben, in die Zieldaten, die das Geschäftsobjekt beschreiben, vorgibt, wobei eine Migrationsregel wenigstens eine Migrationsvariante bereitstellt, wobei eine Migrationsvariante vordefinierten Code aufweist, der zum Modifizieren von Quellwerten gemäß den Anforderungen der Zieldatenfelder des Zielsystems geeignet ist;
wobei das Migrationssystem (50) zum Exportieren von Quelldaten aus dem Quellsystem (10) in wenigstens eine Datendatei (30), deren Struktur den durch das Migrationssystem (50) bereitgestellten Quelldatenstrukturen entspricht, und dann zum Übertragen der wenigstens einen exportierten Datendatei (30) zum Zielsystem (20) durch den Satz Migrationsprogramme (21) gemäß der wenigstens einen Migrationsregel (620) geeignet ist;
wobei der Satz Migrationsprogramme (21) ferner eine Konverterkomponente, eine Lesekomponente und eine Schreibkomponente aufweist, wobei die Lesekomponente zum Konvertieren der exportierten Quelldaten in eine interne Datendarstellung geeignet ist, die Schreibkomponente zum Übertragen der Daten aus der internen Datendarstellung zu einer Zieldarstellung geeignet ist, wobei die Migration durch Verwenden der Daten in der internen Datendarstellung durchgeführt wird, wobei die Controllerkomponente geeignet ist
zum Auslösen der Lesekomponente und zum Weiterleiten der Informationen über den bestimmten Teil der Daten zur Lesekomponente, wobei die Lesekomponente die Kontrolle wieder an die Controllerkomponente zurückgibt,
zum Auslösen der Konverterkomponente zum Durchführen der Datenkonvertierung gemäß den Migrationsregeln, wobei die Konverterkomponente die Kontrolle wieder an die Controllerkomponente zurückgibt, und
zum Auslösen der Schreibkomponente zum Durchführen des Importierens des konvertierten Datenteils, wobei die Schreibkomponente die Kontrolle wieder an die Controllerkomponente zurückgibt.

2. System nach Anspruch 1, wobei das Controllerprogramm die Migrationsprogramme (21) steuert.

3. System nach einem der vorhergehenden Ansprüche, das ferner einen Programmgenerator (100) aufweist, der zum Generieren der Migrationsprogramme (21) innerhalb des Zielsystems (20) und zum Starten der Migrationsprogramme unverzüglich oder nach einer Verzögerung geeignet ist.

4. System nach Anspruch 3, das ferner Folgendes aufweist:
ein erstes Untersystem, in dem sich die Geschäftsobjekte befinden,
ein zweites Untersystem, in dem sich die Definitionen der Datenstrukturen der Quelldaten, die Definitionen der Datenstrukturen der Zieldaten, die Migrationsregeln (620) und der Programmgenerator (100) befinden, und
ein drittes Untersystem, in dem sich die Zieldaten befinden.

5. System nach Anspruch 4, wobei die Programme in eine Softwareanwendung generiert werden, die sich beim dritten Untersystem befindet.

6. System nach Anspruch 1, wobei das Migrieren der Quelldaten das Anwenden der Migrationsregeln (620) auf die Quelldaten enthält.

7. System nach einem der vorhergehenden Ansprüche, wobei der Satz Migrationsprogramme (21) ausführbare binäre Programme und interpretierbaren Programmcode aufweist.

8. System nach einem der vorhergehenden Ansprüche, wobei das Ziel eines von einer Datenbank, einer Flatfile, einer strukturierten Datei, einer XML-Datendatei, einem Datencontainer, einer Nachricht, einem Dienst und einer Softwareanwendung ist.

9. System nach Anspruch 1 oder 6, wobei die Definition der Datenstrukturen der Quelldaten in einem von einer Flatfile, einer strukturierten Datei, einem XML-Schema, einem Daten-Repository und einer XML-Datendatei gespeichert wird.

10. System nach Anspruch 1, 6 oder 9, wobei die Definition der Datenstrukturen der Quelldaten durch Verdecken oder Zeigen von Quelldatenfeldern spezifisch anpassbar oder erweiterbar ist.

11. System nach Anspruch 9, wobei die Datenquelle eine von einer Datenbank, einer Flatfile, einer strukturierten Datei, einer XML-Datendatei und einer Softwareanwendung gemäß der Quelldatendefinition ist.

12. System nach Anspruch 10, wobei die Datenquelle eines von einer Datenbank, einer Flatfile, einer strukturierten Datei, einer XML-Datendatei und einer Softwareanwendung gemäß der Quelldatendefinition ist.

13. System nach einem der vorhergehenden Ansprüche, das ferner eine Speichervorrichtung aufweist, die vordefinierte Migrationswerte speichert.

14. System nach Anspruch 1, wobei eine Migrationsregel wenigstens eines der Folgenden beinhaltet:
ein Mapping von Quelldatenfeldern auf Zieldatenfelder;
eine Konvertierung von Quelldatenwerten der zu migrierenden Daten, bei der die Konvertierung wenigstens Berechnung, Übersetzung von Quelldatenwerten der zu migrierenden Daten auf Basis von Wertübersetzungstabellen, Zuweisungen fester Werte zu Zieldatenfeldem beinhaltet;
eine Kombination von Konvertierungen und
ein Mapping von vordefinierten Migrationsdaten auf Zieldatenfelder und Verknüpfen vordefinierter Migrationsdaten mit Quelldatenwerten.

15. System nach Anspruch 1, das ferner ein Mittel zum Markieren eingefügter und gespeicherter Daten und ein Mittel zum Entfernen der markierten Daten aus den Datenzielen aufweist.

16. Verfahren zur Migration von Geschäftsobjekten von einem Quellsystem (10) in ein Zielsystem (20), wobei ein Geschäftsobjekt eine Sammlung von Geschäftsdaten ist, wobei das Verfahren Folgendes aufweist:
Auswählen von wenigstens einem Migrationsobjekt auf Basis der zu migrierenden Geschäftsobjekte und
Generieren eines Satzes Migrationsprogramme (21) auf Basis des ausgewählten wenigstens einen Migrationsobjekts, der eine Controllerkomponente zum Bestimmen eines zu migrierenden Teils der Daten, eine Konverterkomponente, eine Lesekomponente und eine Schreibkomponente aufweist, wobei der Satz Migrationsprogramme die Migration von das Geschäftsobjekt beschreibenden Quelldaten in das Geschäftsobjekt beschreibende Zieldaten durchführt;
**dadurch gekennzeichnet, dass** jedes Migrationsobjekt Folgendes aufweist:
eine Definition der Datenstrukturen der Quelldaten, die das Geschäftsobjekt beschreiben, und eine Definition der Datenstrukturen der Zieldaten, die das Geschäftsobjekt beschreiben; und
wenigstens eine Migrationsregel (620), die die Migration der Quelldaten, die das Geschäftsobjekt beschreiben, in die Zieldaten, die das Gechäftsobjekt beschreiben, vorgibt, wobei eine Migrationsregel wenigstens eine Migrationsvariante bereitstellt, wobei eine Migrationsvariante vordefinierten Code aufweist, der zum Modifizieren von Quellwerten gemäß den Anforderungen der Zieldatenfelder des Zielsystems geeignet ist;
wobei das Verfahren die folgenden Schritte aufweist:
Exportieren von Quelldaten aus dem Quellsystem (10) in wenigstens eine Datendatei (30), deren Struktur den durch das Migrationssystem (50) bereitgestellten Quelldatenstrukturen entspricht, und dann
Übertragen der wenigstens einen exportierten Datendatei (30) zum Zielsystem (20) durch den Satz Migrationsprogramme (21) gemäß der wenigstens einen Migrationsregel (620);
wobei die exportierten Quelldaten in eine interne Datendarstellung konvertiert werden, die Migration durch Verwenden der Daten in der internen Datendarstellung durchgeführt wird und die migrierten Daten aus der internen Datendarstellung zu einer Zieldarstellung übertragen werden, wobei die Controllerkomponente
die Lesekomponente auslöst und die Informationen über den bestimmten Teil der Daten zur Lesekomponente weiterleitet, wobei die Lesekomponente die Kontrolle wieder an die Controllerkomponente zurückgibt,
die Konverterkomponente zum Durchführen der Datenkonvertierung gemäß den Migrationsregeln auslöst, wobei die Konverterkomponente die Kontrolle wieder an die Controllerkomponente zurückgibt, und
die Schreibkomponente zum Durchführen des Importierens des konvertierten Datenteils auslöst, wobei die Schreibkomponente die Kontrolle wieder an die Controllerkomponente zurückgibt.

17. Verfahren nach Anspruch 16, wobei der Satz Migrationsprogramme Folgendes aufweist:
ein erstes Programm, das Daten aus einer Vielzahl von Datenquellen auswählt;
ein zweites Programm, das ausgewählte Daten durch Anwenden von wenigstens einer Migrationsregel auf die ausgewählten Daten modifiziert; und
ein drittes Programm, das die modifizierten Daten in die Datenziele einfügt.

18. Verfahren nach Anspruch 17, wobei die Controllerkomponente ferner das zweite Programm auslöst und das erste, zweite und dritte Programm steuert.

19. Verfahren nach Anspruch 17 oder 18, wobei das erste Programm eine Anzahl von Schnittstellen für den Zugriff auf Datenquellen verschiedener Formate an verschiedenen Stellen bereitstellt.

20. Verfahren nach Anspruch 17, 18 oder 19, wobei das dritte Programm eine Anzahl von Schnittstellen für den Zugriff auf Datenziele verschiedener Formate bereitstellt.

21. Verfahren nach einem der Ansprüche 16 bis 20, wobei die Migrationsprogramme ausführbare binäre Programme und interpretierbare Programmcodes aufweist.

22. Verfahren nach einem der Ansprüche 16 bis 21, wobei eine Migrationsregel wenigstens eines der Folgenden beinhaltet:
ein Mapping von Quelldatenfeldern auf Zieldatenfelder;
eine Konvertierung von Quelldatenwerten, bei der die Konvertierung wenigstens Berechnung, Übersetzung von Quelldatenwerten auf Basis von Wertübersetzungstabellen, Zuweisungen fester Werte zu Zieldatenfeldern beinhaltet;
eine Kombination von Konvertierungen und
ein Mapping von vordefinierten Migrationsdaten auf Zieldatenfelder und Verknüpfen vordefinierter Migrationsdaten mit Quelldatenwerten.

23. Verfahren nach einem der Ansprüche 17 bis 21, wobei das Einfügen einen Schritt des Markierens eingefügter Daten aufweist.

24. Verfahren nach Anspruch 23, wobei das Markieren das Einfügen von Entfernungsanweisungen aufweist, die zum Entfernen eingefügter Daten geeignet sind.

25. Verfahren nach Anspruch 23, das ferner das Entfernen eingefügter und markierter Daten aus dem Datenziel aufweist.

26. Verfahren nach einem der Ansprüche 17 bis 21, das ferner das Speichern und Laden von Datenmigrationsdefinitionen aufweist.

27. Computerprogrammprodukt, das Anweisungen zum Ausführen der Verfahrensschritte der Ansprüche 16 bis 26 beim Laden an einem Computer aufweist.

## Revendications

1. Système (50) de migration d'objets de gestion à partir d'un système source (10) vers un système cible (20), un objet de gestion étant une collection de données commerciales, le système comprenant :
un ensemble d'objets de migration pour une utilisation avec le système de migration et
un ensemble de programmes de migration (21) approprié pour effectuer la migration en fonction de l'ensemble des objets de migration, les programmes de migration comprenant un composant de contrôle pour la détermination d'une partie des données devant être migrée,
où un objet de migration comprend :
une définition des structures de donnée de la donnée source qui décrit l'objet de gestion, et une définition des structures de donnée de la donnée cible qui décrit l'objet de gestion ; et
au moins une règle de migration (620) qui précise la migration de la donnée source décrivant l'objet de gestion dans la donnée cible décrivant l'objet de gestion, où une règle de migration procure au moins une variante de migration, une variante de migration comprenant un code prédéfini approprié pour modifier des valeurs sources en fonction des exigences des champs de données de destination du système de destination ;
où le système de migration (50) est approprié pour exporter la donnée source à partir du système source (10) dans au moins un fichier de données (30), dont la structure correspond aux structures de données sources fournies par le système de migration (50), et ensuite pour transférer l'au moins un fichier de données (30) vers le système cible (20) par l'ensemble des programmes de migration (21) en fonction de l'au moins une règle de migration (620) ;
l'ensemble des programmes de migration (21) comprenant en outre un composant de conversion, un composant de lecture et un composant d'écriture, le composant de lecture étant approprié pour convertir la donnée source exportée en une représentation de donnée interne, le composant d'écriture étant approprié pour transférer la donnée à partir de la représentation de donnée interne vers une représentation cible, la migration étant effectuée en utilisant la donnée dans la représentation de donnée interne, où le composant de contrôle est approprié pour déclencher le composant de lecture et pour passer l'information concernant la partie déterminée de la donnée vers le composant de lecture, où le composant de lecture repasse le contrôle au composant de contrôle,
pour déclencher le composant de conversion afin d'effectuer la conversion de la donnée en fonction des règles de migration, où le composant de conversion repasse le contrôle au composant de contrôle, et
pour déclencher le composant d'écriture afin d'effectuer l'importation de la partie de donnée convertie, où le composant d'écriture repasse le contrôle au composant de contrôle.

2. Système selon la revendication 1, dans lequel le programme de contrôle commande les programmes de migration (21).

3. Système selon l'une des revendications précédentes, comprenant en outre un générateur de programme (100) approprié pour générer les programmes de migration (21) à l'intérieur du système cible (20) et pour démarrer les programmes de migration immédiatement ou après un délai.

4. Système selon la revendication 3, comprenant en outre :
un premier sous-système dans lequel les objets de gestion sont localisés,
un deuxième sous-système dans lequel les définitions des structures de donnée de la donnée source, les définitions des structures de donnée de la donnée cible, les règles de migration (620) et le générateur de programme (100) sont localisés, et
un troisième sous-système dans lequel la donnée cible est située.

5. Système selon la revendication 4, dans lequel les programmes sont générés dans une application logicielle qui est localisée avec le troisième sous-système.

6. Système selon la revendication 1, dans lequel la migration de la donnée source comprend l'application des règles de migration (620) à la donnée source.

7. Système selon l'une des revendications précédentes, dans lequel l'ensemble des programmes de migration (21) comprend des programmes binaires exécutables et un code de programme interprétable.

8. Système selon l'une des revendications précédentes, dans lequel la cible est l'un des éléments parmi une base de données, un fichier plat, un fichier structuré, un fichier de données XML, un conteneur de données, un message, un service et une application logicielle.

9. Système selon la revendication 1 ou 6, dans lequel la définition des structures de donnée de la donnée source est stockée dans un élément parmi un fichier plat, un fichier structuré, un schéma XML, un dépôt de données et un fichier de données XML.

10. Système selon la revendication 1, 6 ou 9, dans lequel la définition des structures de donnée de la donnée source peut être personnalisable ou extensible en cachant ou en montrant des champs de données sources.

11. Système selon la revendication 9, dans lequel la donnée source est un élément parmi une base de données, un fichier plat, un fichier structuré, un fichier de données XML, et une application logicielle en fonction de la définition de la donnée source.

12. Système selon la revendication 10, dans lequel la source de donnée est un élément parmi une base de données, un fichier plat, un fichier structuré, un fichier de données XML, et une application logicielle en fonction de la définition de la donnée source.

13. Système selon l'une des revendications précédentes, comprenant en outre un dispositif de stockage qui stocke des valeurs de migration prédéfinies.

14. Système selon la revendication 1, dans lequel une règle de migration inclut au moins un des éléments parmi :
une mise en correspondance de champs de données sources à des champs de données cibles,
une conversion de valeurs de données sources des données devant être migrées, ce par quoi, la conversion inclut au moins une mise en oeuvre, une translation de valeurs de données sources des données devant être migrées sur la base de tableaux de translation de valeurs, d'attributions de valeurs fixées à des champs de données cibles,
une combinaison de conversions, et
une mise en correspondance de données de migration prédéfinies avec des champs de données cibles et une concaténation des données de migration prédéfinies avec des valeurs de données sources.

15. Système selon la revendication 1, comprenant en outre des moyens pour marquer des données insérées et stockées et des moyens pour retirer les données marquées des destinations de données.

16. Procédé de migration d'objets de gestion à partir d'un système source (10) dans un système cible (20), un objet de gestion étant une collection de données commerciales, le procédé comprenant :
la sélection, sur la base des objets de gestion devant être migrés, d'au moins un objet de migration ; et
la génération, sur la base de l'au moins un objet de migration sélectionné, d'un ensemble de programmes de migration (12) comprenant un composant de contrôle pour déterminer une partie des données qui doit être migrée, un composant de conversion, un composant de lecture et un composant d'écriture, l'ensemble des programmes de migration effectuant la migration des données sources décrivant l'objet de gestion dans les données cibles décrivant l'objet de gestion ;
**caractérisé en ce que** chaque objet de migration comprend :
une définition des structures de donnée de la donnée source qui décrit l'objet de gestion, et une définition des structures de donnée de la donnée cible qui décrit l'objet de gestion ; et
au moins une règle de migration (620) qui précise la migration de la donnée source décrivant l'objet de gestion dans la donnée cible décrivant l'objet de gestion, où une règle de migration procure au moins une variante de migration, une variante de migration comprenant un code prédéfini approprié pour modifier les valeurs sources en fonction des exigences des champs de données de destination du système de destination ;
le procédé comprenant les étapes
d'exportation de la donnée source à partir du système source (10) dans au moins un fichier de données (30), dont la structure correspond aux structures de donnée source procurée par le système de migration (50), et ensuite,
de transfert de l'au moins un fichier de données (30) exporté vers le système cible (20) par l'ensemble des programmes de migration (21) en fonction de l'au moins une règle de migration (620),
où la donnée source exportée est convertie en une représentation de donnée interne, la migration est effectuée en utilisant la donnée dans la représentation de donnée interne, et la donnée migrée est transférée à partir de la représentation de donnée interne vers une représentation cible, où le composant de contrôle
déclenche le composant de lecture et passe l'information concernant la partie déterminée de la donnée vers le composant de lecture, où le composant de lecture repasse le contrôle au composant de contrôle,
déclenche le composant de conversion afin d'effectuer la conversion de la donnée en fonction des règles de migration, où le composant de conversion repasse le contrôle au composant de contrôle, et
déclenche le composant d'écriture afin d'effectuer l'importation de la partie de donnée convertie, où le composant d'écriture repasse le contrôle au composant de contrôle.

17. Procédé selon la revendication 16,
dans lequel l'ensemble des programmes de migration comprend :
un premier programme qui sélectionne des données à partir d'une pluralité de sources de données ;
un deuxième programme qui modifie des données sélectionnées en appliquant au moins une règle de migration à la donnée sélectionnée ; et
un troisième programme qui insère les données modifiées dans les destinations de données.

18. Procédé selon la revendication 17,
dans lequel le composant de contrôle déclenche en outre le deuxième programme et contrôle les premier, deuxième et troisième programmes.

19. Procédé selon la revendication 17 ou 18,
dans lequel le premier programme procure un nombre d'interfaces pour accéder aux sources de données de différents formats sur différentes localisations.

20. Procédé selon la revendication 17, 18 ou 19,
dans lequel le troisième programme procure un nombre d'interfaces pour accéder aux destinations de données de différents formats.

21. Procédé selon l'une des revendications 16 à 20,
dans lequel les programmes de migration comprennent des programmes binaires exécutables et des codes de programme interprétables.

22. Procédé selon l'une des revendications 16 à 21,
dans lequel une règle de migration inclut l'un des éléments parmi :
une mise en correspondance de champs de données sources à des champs de données cibles,
une conversion de valeurs de données sources, ce par quoi, la conversion inclut au moins une mise en oeuvre, une translation de valeurs de données sources sur la base de tableaux de translation de valeurs, d'attributions de valeurs fixées à des champs de données cibles,
une combinaison de conversions, et
une mise en correspondance d'une donnée de migration prédéfinie à des champs de données cibles et une concaténation de la donnée de migration prédéfinie avec des valeurs de données sources.

23. Procédé selon l'une des revendications 17 à 21,
dans lequel l'insertion comprend une étape de marquage de données insérées.

24. Procédé selon l'une des revendications 17 à 21,
dans lequel le marquage comprend l'insertion d'états de retrait appropriés pour retirer les données insérées.

25. Procédé selon la revendication 23,
comprenant en outre le retrait de données insérées et marquées à partir de la destination de données.

26. Procédé selon l'une des revendications 17 à 21,
comprenant en outre le stockage et la charge de définitions de migration de données.

27. Produit de programme informatique comprenant des instructions pour l'exécution des étapes de procédé selon les revendications 16 à 26 lorsqu'elles sont chargées sur un ordinateur.
